# EUROPEAN PATENT SPECIFICATION

(11) **EP 1 733 615 B1**
(45) Date of publication and mention of the grant of the patent: **13.08.2008**
(21) Application number: 05012920.4
(22) Date of filing: 15.06.2005
(51) Int. Cl.: A01K 1/12

(54) **Rotary milking parlour**
Karussellmelkanlage
Manège de traite rotatif

(43) Date of publication of application: 20.12.2006
(73) Proprietor: DeLaval Holding AB, 147 21 Tumba (SE)
(72) Inventor: Brunner, Manfred, 95482 Gelfrees (DE); Amann, Alfons, 87487 Wiggensbach (DE); Baum, Werner, 96126 Maroldsweisach (DE)
(74) Representative: Kossmann, Jan Henrik

(56) References cited:
- EP-A- 0 763 970
- EP-A- 1 523 882
- WO-A-02/23979
- DE-A1- 10 224 239
- GB-A- 1 201 651

## Description

### BACKGROUND OF THE INVENTION AND PRIOR ART

The present invention relates to a rotary parlour for milking of animals, comprising a rotary platform arranged to form a support surface for the animals, stalling means arranged to divide the parlour into stalls receiving individual animals, wherein the stalling means comprises a gate which is arranged to be located between adjacent animals standing in a milking position, and a movable feed trough for an animal in the milking position.

Reference shall now specifically be made to the use of the present invention in relation to rotary milking parlours, however, again it should be appreciated that the principles of the present invention could be applied to other situations.

It is known to provide parlours with feed troughs. A feed trough attracts the cow and facilitates a correct positioning of the cow in the stall. In particular, the milking period is a suitable occasion to feed the cows. Due to the feeding, the cows become relaxed during the milking operation and move less.

WO 03/086057 discloses a device for feeding livestock, comprising a tiltable feed trough which is mounted on an upright forming part of a stationary fence of a milking parlour. The tiltable trough comprises a bottom with a form which is adapted to the respective tilting positions of the trough. On the one hand, this results in a positioning of the feed trough in lengthwise direction of the milking parlour, on the other hand, however, the height of the trough is not constant during such positioning.

Regarding the structure and the design of the parlour itself, a wide variety of rotary or stationary parlours is known. Depending on the arrangement of dividing members (which can be movable or not), the cows may, for example, be positioned in a herringbone pattern during the milking operation.

A typical stationary herringbone milking parlour has front and rear cow position delimiting means (front and rear barriers), with the cows usually entering the milking parlour one after the other in such a manner that they walk through the parlour in parallel with the milker pit. The first cow entering the parlour moves to a milking position at the far end from the entrance of the parlour and comes to stand at an angle to the milker pit to allow easy milker access to the cow's udder from the side. In the herringbone parlour, the cows assume a slightly angular side- by- side position with their heads pointed towards the parlour side opposite the milker pit. In their milking positions in the herringbone parlour, adjacent animals are offset from each other by about half their body length, as is customary practice.

US A 4,508,059 discloses such a stationary herringbone milking parlour comprising partitions between the stalls and feed bowls. To increase the width of the ingress/egress aisle for the cow, the feed bowls and the partitions are linked to each other to perform a complicated interconnected movement consisting of linear displacements and rotations. This special movement takes into account the stationary structure of the milking parlour and the resulting movement of the cows to and from the milking stall. In particular, all cows leave the parlour at the same time - thus, this technology is not applicable to rotary parlours where the cows leave the parlour separately when they pass the exit.

It is known that rotary milking parlours provide major advantages for the milking process if the cow herds to be milked are large. However, the movement of the cows to and from the individual stalls poses problems here as well. One of the limiting factors when milking cows on a rotary parlour is the speed of entry and exit of the cows to the platform of the parlour: a cow can only enter and exit a rotary platform during a defined time period during which the platform rotates past an entry and an exit opening, resp. Furthermore, for maximum efficiency, it is important that the cows are packed closely together on the platform so that a maximum of cows can be milked at any one time. To achieve this, the cows entering the parlour have only a limited amount of room in which to maneuver themselves into the appropriate milking position. This problem is even increased if a feed trough is provided which constitutes an additional obstruction during the entry or exit of the animal. It is this entering/exiting procedure which takes time and slows down the milking process considerably.

FR 2 649 858 discloses a rotary milking parlour, comprising an annular conveyor consisting of a horizontal platform with a succession of stalls as well as feeding and milking equipment. The feeding equipment is provided separately and follows the movement of the conveyor around its outer periphery. When the cow is in a milking position the feeding equipment is moved radially inwardly towards the location of the cow, and when the cow is entering or leaving the stall it is moved radially outwardly. Obviously, this construction of the feeding equipment as well as the movement thereof is rather complicated. Furthermore, no hint is given how an individual adaptation of the feeding equipment to a particular cow can be achieved.

GB 1 201 651 discloses a rotary milking parlour, comprising dividing members being pivotable around a vertical axis at the inner periphery of the rotating platform, wherein each of the members carries a feeding trough at its radially outer free end. The feeding troughs - which are fixed to the dividing members - are pivoted together with the dividing members. The feeding troughs are provided in such a way that they are not located in front of the cow but beside it. As a result of this construction, the cows have to stand in the stalls with their heads turned sideways in relation to the remaining body for eating the food in the feeding troughs. Furthermore, the feeding troughs take up additional space between the cows.

WO 02/23979 discloses a rotary milking parlour, comprising turnable dividing members between the stalls, wherein each of the dividing members has a feeding trough fixed thereto. Thus, as in GB 1 201 651, each dividing member and feed trough pivot as one unit about a vertical axis. However, here the unit pivots about a vertical axis at the outer periphery of the platform and the feed troughs are fixed to the dividing members in such a way that the animals can now stand in a natural straight position. Nevertheless, the feed trough constitutes an obstruction for entry and exit.

EP 0 763 970 discloses a herringbone- type rotary milking parlour, comprising an annular milking platform with radially inner rear barriers as well as a front barrier associated with each milking position and adapted to be moved to a forward cow access position by being pivoted about a horizontal bottom axis. The front barrier can be provided with a feed manger. However, due to this construction, the feed manger constitutes an obstruction for entry and exit of the animal.

EP 1 523 882 A2 discloses an assembly for and a method of feeding and milking animals with a feed platform, a milking pre- treatment device, a milking post- treatment device, a cleaning device, a separation device and a milking system. The assembly also includes a feed trough which is tiltable around a horizontal axis. This movement generates a torque whose magnitude is determined, and from the torque determined the weight of feed present in the feed trough is determined. Furthermore, owing to the fact that the feed trough is movable, it can also function as a closing device for the access opening thereto.

DE 102 24 239 A1 discloses a rotary milking parlour with a number of stalling places for animals to be milked. Dividing elements are provided which can be spatially displaced in such a way that they provide for an easy entry and exit to the stalling places as well as an easy positioning of the animals without further enforcement means.

As can be seen from the discussion above, all of the prior art solutions have drawbacks. The solutions are rather complicated - and, thus, expensive and accident sensitive - and/or they do neither provide for an (adequate) adaptation of the location of the feed trough to individual cows nor do they solve the problem that the feed trough constitutes an additional obstruction when the animal is entering or leaving the platform.

### SUMMARY OF THE INVENTION

It is an object of the present invention to provide a parlour equipped with movable feed troughs which are arranged in such a way that not only an improved and more efficient movement of the feed trough out of the way of an animal when entering or leaving the parlour is achieved but also an adequate and voluntary adaptation of the location of the feed trough to individual cows.

The feed trough is turnable about a substantially vertical axis. Due to the fact that the feed trough is movable, the feed trough can be positioned in front of the animal and still the opening available to the animal for entering and leaving the stall is wider than in the prior art cases where the feed trough is fixed and thus forms an additional obstruction. At the same time, due to the fact that the feed trough pivots about a vertical axis, the cow can push the feed trough into a position such that it can comfortably eat therefrom without having to adapt her position in the Stall. Instead, the Stall length is adjusted by means of the pivotable feed trough which furthermore remains substantially at the same height in all positions - when a short cow puts her nose into the trough it pivots towards the cow, when a long cow puts her nose into the trough it pivots away from the cow.

According to the invention as defined in claim 1, the gate is turnably arranged about a vertical axis such that it can be pivoted from a stalling position with the animals standing in a milking position to an open position, wherein the feed trough is turnable about its substantially vertical axis independently of the gate. In this way, a higher flexibility is achieved: on the one hand, the entry and exit opening for the cow can be enlarged by moving the gate in a suitable position, on the other hand, the gate can be moved to support the movement of the cow out of the stall by pushing it out.

According to an embodiment of the invention, the parlour is a rotary parlour comprising a rotary platform arranged to form a support surface for the animals, wherein, in the stalling position, the first end of the gate is located at a radially outer position in relation to the second end. Preferably, the rotary parlour comprises an entry and an exit for the animals to and from the platform, resp. As explained above, since a cow can only enter and exit a rotary platform during a defined time period while the platform is rotating past an entry and an exit opening, resp., a wider opening will result in a longer time period for the animal to enter and leave the platform. Thus, the platform can be rotated at a higher speed and the animal still has enough time to enter and leave the platform comfortably.

According to a further embodiment of the invention, control means are provided for controlling the turning of the gate around its vertical axis and for controlling the turning of the feed trough around its substantially vertical axis independently of the gate. Preferably, the control means for controlling the turning of the feed trough around its substantially vertical axis comprises inclined abutting surfaces biasing the feed trough into the feeding position.

According to a further embodiment of the invention, the stalling means is arranged to position the animals in a herringbone pattern along the platform. By such an arrangement, the animals may be placed close together on the platform. However, it is possible to use other kinds of arrangement of the animals on the platform in connection with the gates.

According to a further embodiment of the invention, the vertical axis of the gate is located near the outer periphery of the rotary platform. The vertical axis of the gate and the vertical axis of the corresponding trough may be the same. In this way, less vertical posts are needed and the assembly of the parlour is simplified. However, the vertical axis of each gate can also be located near the inner periphery of the rotary platform and the vertical axis of the gate and the vertical axis of the corresponding trough can be different axes. Preferably, each gate has an essentially straight extension between the first and second ends. Thereby, a simple and functional construction of the gates is obtained.

According to a further embodiment of the invention, the entry and exit to the platform of the rotary parlour are located at the outer circumference of the platform and located beside each other. Thus, the animals rotate nearly 360° during the milking operation. The entry may have a gate which is arranged to open periodically in response to the position of the platform and enables entrance of the animals to the platform. Preferably, each stall comprises milking means such as a milking cluster. Thus, a simple attachment of the milking means to the animals is obtained.

### BRIEF DESCRIPTION OF THE DRAWINGS

The present invention will now be explained in more detail by means of preferred embodiments which are disclosed as examples, and with reference to the attached drawings.
- Fig. 1: shows a view from above of a rotary parlour for milking of cows which is equipped with gates and troughs according to the invention, wherein the gates are turned around an axis located near the outer periphery of the rotary platform.
- Fig. 2: shows a view from above of a rotary parlour for milking of cows which is equipped with gates and troughs according to the invention, wherein the gates are turned around an axis located near the inner periphery of the rotary platform.
- Fig. 3: shows an oblique view of a gate and the corresponding feed trough according to the invention with a common turning axis.
- Fig. 4: shows a side view of the gate and feed trough in Fig. 3.
- Fig. 5: shows a view from above of of a gate and the corresponding feed trough according to the invention with two separate turning axes.
- Fig. 6: shows a side view of a feed trough with an inclined axis.

### BRIEF DESCRIPTION OF THE PREFERRED EMBODIMENTS OF THE INVENTION

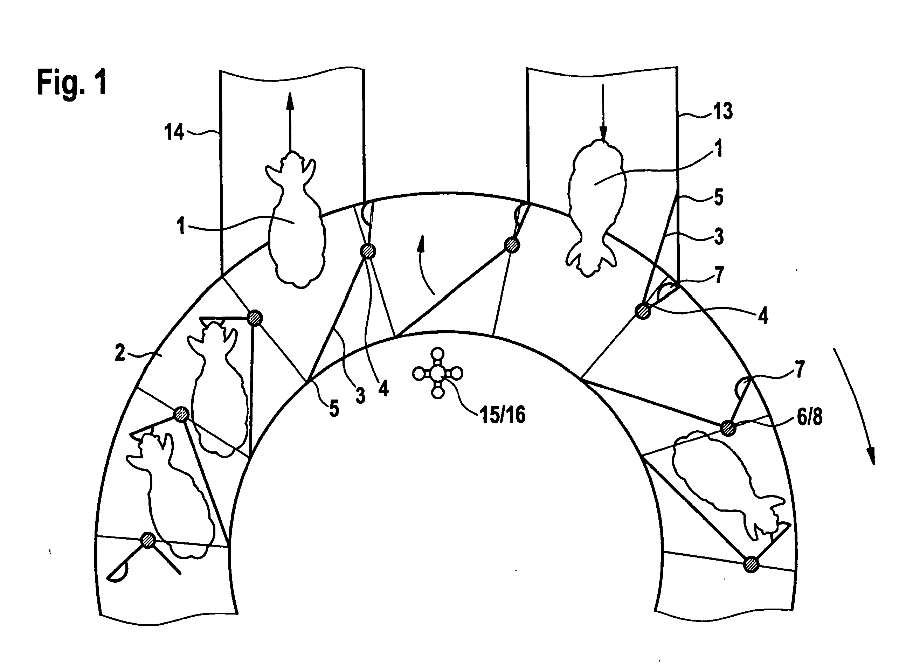

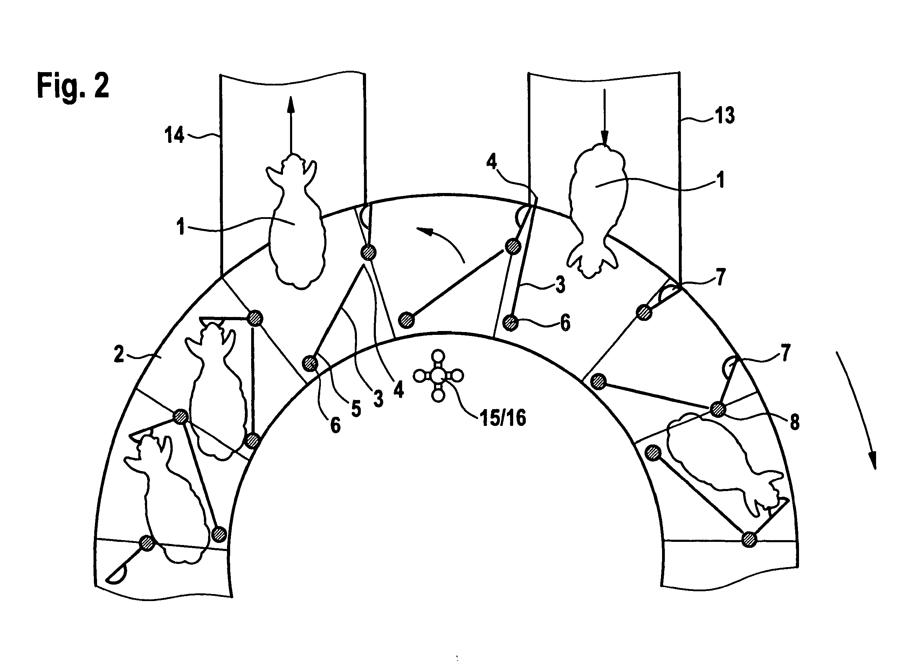

Figs. 1 and 2 illustrate a rotary parlour for milking of cows 1. The parlour comprises a rotary platform 2 having an annular extension. The platform is arranged to form a support surface for the animals 1. For permitting the animals to enter and exit platform 2 an entry 13 and an exit 14 are provided. Exit 14 is located adjacent entry 13. Consequently, the cows 1 rotate nearly 360° during the milking operation. For dividing the platform 2 into stalls for receiving individual cows 1, stalling means are arranged along the extension of the platform 2. The stalling means comprise gates 3 which have an essentially straight extension between a first end 4 and a second end 5 and which are used for positioning the cows 1 in their respective stalls in an adequate stalling position such that they can be milked. In this stalling position, the cows 1 are arranged in a herringbone pattern on the annular platform 2, each cow facing outwardly with the feed trough 7 in front of her, and the operator works from inside of the annular platform 2. The gates 3 are arranged between adjacent cows 1 with the first end 4 located in a radially outer position in relation to the second end 5. Each of the stalls being formed in this manner comprises milking means 15, such as a milking cluster 16, which is attached to the cow 1 after she has entered the stall. (in Figs. 1 and 2, only one milking means 15 being detached from the cow is schematically disclosed.) The milking means 15 may be attached to the cow by the operator or automatically and it may be removed automatically before the cow leaves the stall and walks out through exit 14.

The parlour is provided with feed troughs 7 which attract the cows 1 and facilitate the positioning of the cows in the stalls. The feed troughs 7 are turnable about a vertical axis - it will be explained later in more detail how this pivoting of the feed trough 7 influences the opening available to the animal 1 for entering and leaving the stall through entry 13 and exit 14, resp. Since each feed trough 7 pivots about a vertical axis 8, two further advantages over prior art feed troughs are achieved: on the one hand, the cow 1 can push the feed trough 7 into a position such that it can comfortably eat therefrom without having to adapt her position in the stall, i.e., the stall length is adjusted by means of voluntarily pivoting the feed trough 7 - on the other hand, the feed trough 7 remains substantially at the same height in all positions.

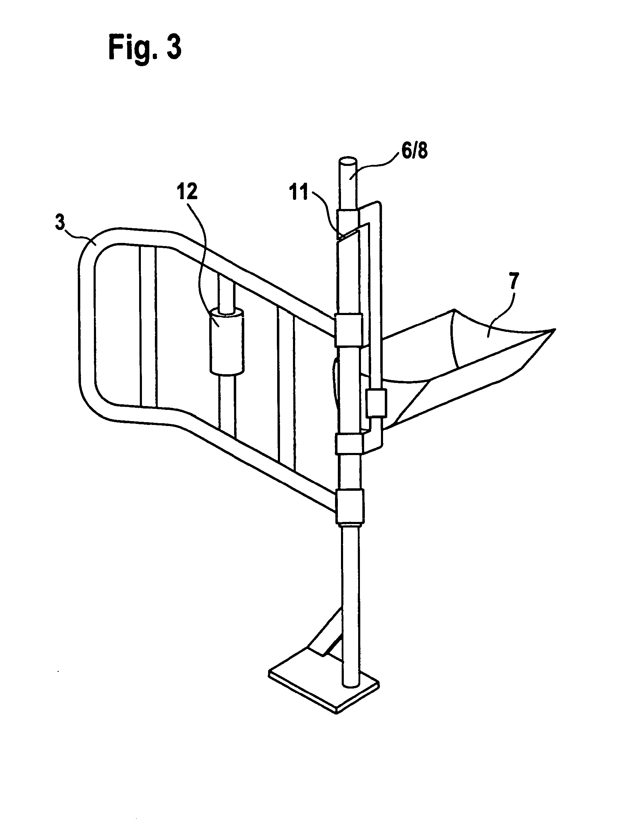

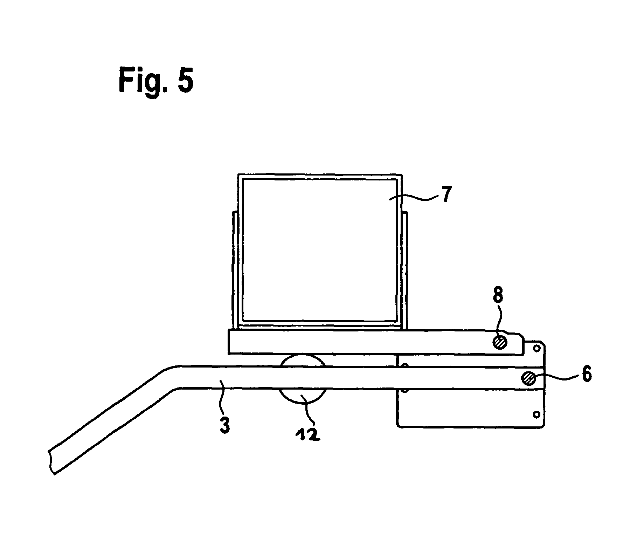

Like the feed troughs, each gate 3 is provided turnably about a vertical axis 6, by means of which two results are achieved: on the one hand, it is possible to arrange the cows 1 close together on the platform 2 - on the other hand, the gates 3 can be moved away to obtain a wider opening for the cows to enter the platform via entry 13. However, the vertical trough axis 8 does not necessarily have to be identical with the gate axis 6. The turning movement of each trough 7 is performed independently of its corresponding gate 3. The vertical turning axes 6 of the gates 3 can be provided at several locations. For example, they can be located near the outer periphery of the rotary platform 2 (cf. Fig. 1) or near the inner periphery (cf. Fig. 2). In either case, the gates 3 can be pivoted in an opening position which permits the cows 1 to enter the platform 2. As can be seen in Figs. 1 and 2, the gates can have an essentially straight extension between the first 4 and second 5 end. Of course, they can also have a curved end portion as shown in Figs. 3 and 5.

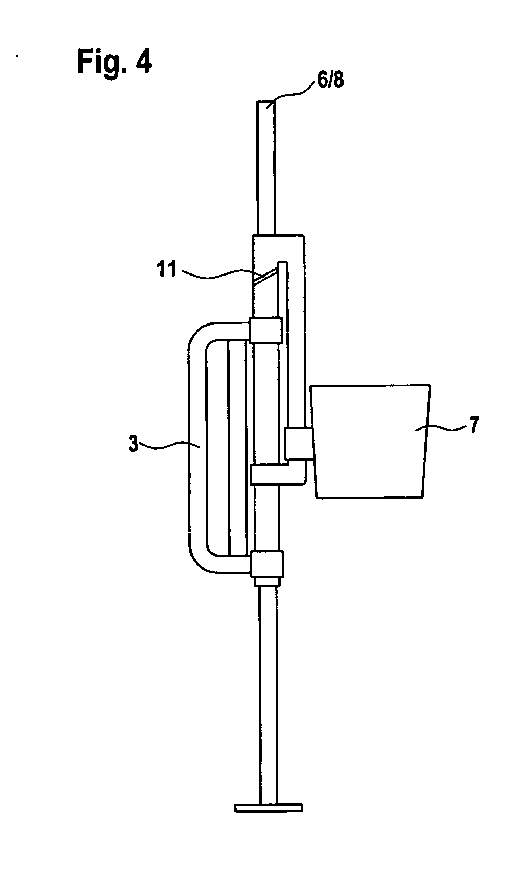

If the feed troughs 7 and their corresponding gates 3 are arranged, for example, in such a way as in Fig. 1, their turning axes 6 and 8, resp., can in fact be the same (as can be seen in Figs. 3 and 4). In this way, an easier assembly of the parlour is achieved without loosing the improved opening of entry 13 and exit 14, resp. If the feed troughs 7 and their corresponding gates 3 are arranged, for example, in such a way as in Fig. 2, their turning axes 6 and 8, resp. can be different axes. Of course, the axes 6 and 8 can also be different in the embodiment of Fig. 1 if desired (cf. Fig. 5). In order to damp the impact when a gate 3 hits the feed trough 7 during the opening movement as illustrated in Fig. 1, the gate 3 can be provided with a covering 12 (cf. Fig. 3), eg. made from plastic.

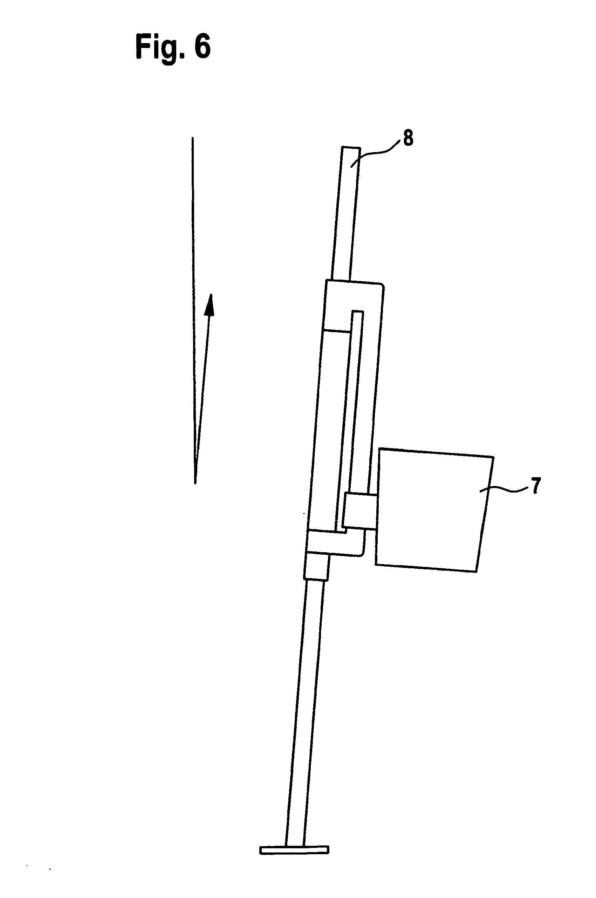

The parlour further comprises means 9 for controlling the turning of the gate 3 around its vertical axis 6 - such means are known, for example, from WO 02/23979. However, since the feed trough 7 is turnable independently of the gate 3, further control means 10 are provided for controlling the turning of the feed trough 7 around its vertical axis 8 independently of the corresponding gate 3. Control means 10 can be provided in a number of ways. For example, they may comprise a guide member connected to the feed trough 7 and arranged to run along a cam surface provided at the entry 13 and the exit 14 adjacent the platform 2 and sloping in such a manner that the guide member is urged to a position corresponding to the open position of the feed trough 7. In this way, the feed trough 7 is swung into its open position when it passes the area of the entry 13 and the exit 14. After having passed this area with the cam surface, the feed trough 7 swings back to the feeding position. This may be achieved, for example, by means of inclined abutting surfaces 11 biasing the feed trough 7 into the feeding position. Alternatively, the substantially vertical axis 8 of the feed trough 7 can be inclined in such a direction that the feed trough levels at the feeding position (cf. Fig. 6). Such a construction is simple and reliable at a reasonable price. Of course, the control means 10 may also be an electronic control.

The parlour in the embodiment of Fig. 1 operates as follows. For entering, the cows which are to be milked are guided in a row through the entry 13. The gate 3 at the entry 13 has been pivoted clockwise in an open position before reaching the entry, whereby a free passage is formed permitting a cow 1 to enter the platform 2. To support this opening movement of the gate 3 at the entry 13 - and to provide for a wider entry opening - the feed trough 7 at the entry may remain in its opened position (cf. further below). As can clearly be seen in Fig. 1, the gate 3 at the entry 13 has its second end 5 located in a radially outer position of the platform 2 in relation to its first end 4, thus leaving a free passage around the first feed trough 7 at the entry 13. The cow 1 walks through this passage around the feed trough 7 at the entry 13 and then straight ahead towards a feed trough 7 located clockwise ahead of the entry 13. After the cow has reached this feed trough 7 the gate 3 is pivoted about its vertical axis 6 from its opened position to the stalling position in a manner known, for example, from WO 02/23979. In this stalling position, the first end 4 of the gate 3 in question is now located in a radially outer position of the platform 2 in relation to its second end 5, thus urging the cow in a correct position in the stall. Since the feed trough 7 is biased to a feeding position in the manner as described above, it swings into this position after it has passed the entry area and after the gate 3 has been pivoted in its stalling position.

In the stall, the cow 1 faces outwardly, and an operator now attaches a cluster 16 to the cow 1 from the inside of the annular platform 2. As already explained, since the feed troughs 7 are turnable about a vertical axis 8, the cow 1 can push the feed trough 7 into a position with her nose such that she can comfortably eat therefrom without having to adapt her position in the stall, i.e., the stall length is adjusted by means of voluntarily pivoting the feed trough 7. During this adjustment, the feed trough 7 remains substantially at the same height in all positions. The cows 1 are arranged in a herringbone pattern along the annular platform 2 and stand in a natural straight position eating the food in the feed troughs 7 during the milking operation.

When a cow has rotated nearly 360° with the platform 2, approaching the exit 14, the cluster 16 may be removed from the teats automatically. For exiting, the feed trough 7 from which the cow has eaten is rotated clockwise around its vertical axis 8 in a manner as described above to open the stall for exiting. This opening movement of the feed trough 7 takes place independently of the corresponding gate 3 which may be left in its stalling position. However, the gate 3 can also be turned clockwise around its vertical axis 6 at this stage, for example, in order to force the cow 1 out of the stall. As can clearly be seen from Fig. 1, the pivoting movement of the feed trough 7 in question leads to a considerably large free opening for the cow for leaving the stall - thus giving her more time to leave the platform 2 through exit 14 than in cases with fixed feed troughs. After the cow has left the platform 2, the gate 3 is moved (further) clockwise to its open position before the platform 2 has finally rotated 360° reaching the entry 13 again such that a new cow can now enter the stall.

The entry and exit procedure in Fig. 2 is completely analogous to the one described in connection with Fig. 1, except for a different opening movement of the gates 3. Instead of being pivoted clockwise around vertical axes 6 located near the outer periphery of the platform 2, they are pivoted counterclockwise about vertical axes 6 located near the inner periphery of the platform 2 to allow for a wide entrance opening to the platform 2.

It should be noted that the invention is not restricted to the embodiments as described above in connection with the figures, but may be varied freely within the scope of the following claims. For example, the parlour may be operated completely automatically and may be provided with a robot arm for attaching the teat cups to the teats of a cow instead of being operated partially manually by an operator.

## Claims

1. A rotary parlour for milking of animals (1), comprising a rotary platform (2) arranged to form a support surface for the animals, stalling means arranged to divide the parlour into stalls receiving individual animals, wherein the stalling means comprises a gate (3) which is turnably arranged about a vertical axis (6) such that it can be pivoted from a stalling position located between adjacent animals standing in a milking position to an open position, and a movable feed trough (7) for an animal in the milking position, wherein the feed trough is turnable about a substantially vertical axis (8), **characterized in that** the feed trough (7) is turnable about its substantially vertical axis (8) independently of the gate.

2. The parlour according to claim 1, **characterized in that** control means (10) are provided for controlling the turning of the feed trough (3) around its substantially vertical axis (8).

3. The parlour according to claim 2, **characterized in that** the control means (10) for controlling the turning of the feed trough (7) around its substantially vertical axis (8) comprises inclined abutting surfaces (11) biasing the feed trough into a feeding position.

4. The parlour according to one of the preceding claims, **characterized in that** the vertical axis (6) of the gate (3) and the substantially vertical axis (8) of the trough (3) are the same.

5. The parlour according to one of claims 1-3, **characterized in that** the vertical axis (6) of the gate (3) and the substantially vertical axis (8) of the corresponding trough (3) are different axes.

6. The parlour according to one of the preceding claims, **characterized in that** control means (9) are provided for controlling the turning of the gate (3) around its vertical axis (6).

7. The parlour according to one of the preceding claims, **characterized in that** the gate (3) is provided with a covering (12) for damping an impact between the gate and the feed trough (7).

8. The parlour according to one of the preceding claims, **characterized in that** the vertical axis (6) of each gate (3) is located near the outer periphery of the rotary platform (2).

9. The parlour according to one of the preceding claims, **characterized in that** the vertical axis (6) of each gate (3) is located near the inner periphery of the rotary platform (2).

10. The parlour according to one of the preceding claims, **characterized in that** the stalling means is arranged to position the animals (1) in a herringbone pattern along the platform (2).

11. The parlour according to one of the preceding claims, **characterized in that** the gate (3) has an essentially straight extension.

## Patentansprüche

1. Karussel-Melkanlage zum Melken von Tieren (1), mit einer Drehplattform (2) zur Bildung einer Stellfläche für die Tiere, mit Stelleinrichtungen, mit denen das Melkkarussel zu Melkständen unterteilbar ist, die jeweils ein einzelnes Tier aufnehmen, wobei die Stelleinrichtungen ein Gatter (3) aufweisen, das um eine vertikale Achse (6) drehbar angeordnet ist derart, dass es sich aus einer Stellposition zwischen jeweils nebeneinander in einer Melkstellung aufgestellten Tieren in eine Offenposition schwenken lässt, und mit einem Futtertrog (7) für ein Tier in seiner Melkposition, wobei der Futtertrog um eine im Wesentlichen vertikale Achse (8) drehbar ist, **dadurch gekennzeichnet, dass** der Futtertrog (7) unabhängig vom Gatter um seine im wesentlichen vertikale Achse (8) drehbar ist.

2. Melkanlage nach Anspruch 1, **dadurch gekennzeichnet, dass** Steuerungseinrichtungen (10) vorgesehen sind, die das Drehen der Futtertröge (3) um ihre im Wesentlichen vertikale Achse (8) steuern.

3. Melkanlage nach Anspruch 2, **dadurch gekennzeichnet, dass** die Steuerungseinrichtungen (10) zum Steuern der Drehung der Futtertröge (7) um ihre im Wesentlichen vertikale Achse (8) schräge, aneinander stoßende Flächen (11) aufweisen, die den jeweiligen Futtertrog in eine Fütterungsposition hinein beaufschlagen.

4. Melkanlage nach einem der vorgehenden Ansprüche, **dadurch gekennzeichnet, dass** die vertikale Achse (6) des Gatters (3) und die im Wesentlichen vertikale Achse (8) des Trogs (3) die gleiche Achse sind.

5. Melkanlage nach einem der Ansprüche 1-3, **dadurch gekennzeichnet, dass** die vertikale Achse (6) des Gatters (3) und die im Wesentlichen vertikale Achse (8) des entsprechenden Trogs (3) unterschiedliche Achsen sind.

6. Melkanlage nach einem der vorgehenden Ansprüche, **dadurch gekennzeichnet, dass** Steuerungseinrichtungen (9) vorgesehen sind, mit denen das Drehen des Gatters (3) um seine vertikale Achse steuerbar ist.

7. Melkanlage nach einem der vorgehenden Ansprüche, **dadurch gekennzeichnet, dass** das Gatter (3) mit einer Auflage (12) versehen ist, mit der sich Aufschläge zwischen Gatter und Futtertrog (7) dämpfen lassen.

8. Melkanlage nach einem der vorgehenden Ansprüche, **dadurch gekennzeichnet, dass** die vertikale Achse (6) jedes Gatters (3) sich nahe dem Außenrand der Drehplattform (2) befindet.

9. Melkanlage nach einem der vorgehenden Ansprüche, **dadurch gekennzeichnet, dass** die vertikale Achse (6) jedes Gatters (3) sich nahe dem Innenrand der Drehplattform (2) befindet.

10. Melkanlage nach einem der vorgehenden Ansprüche, **dadurch gekennzeichnet, dass** mit der Stelleinrichtung die Tiere (1) in einem Fischgrätenmuster entlang der Plattform (2) aufstellbar sind.

11. Melkanlage nach einem der vorgehenden Ansprüche, **dadurch gekennzeichnet, dass** das Gatter (3) sich im Wesentlichen gradlinig erstreckt.

## Revendications

1. Salle de traite tournante pour traire des animaux (1), comprenant une plate-forme rotative (2) agencée pour former une surface de support pour les animaux, des moyens de formation de stalles agencés pour diviser la salle de traite en stalles recevant des animaux individuels, les moyens de formation de stalles comprenant une porte (3) qui est agencée de manière à tourner autour d'un axe vertical (6) de sorte à pouvoir pivoter d'une position de formation de stalle située entre les animaux adjacents debout dans une position de traite jusqu'à une position ouverte, et une mangeoire mobile (7) pour un animal dans la position de traite, la mangeoire étant apte à tourner autour d'un axe sensiblement vertical (8), **caractérisée en ce que** la mangeoire (7) est apte à tourner autour de son axe sensiblement vertical (8) indépendamment de la porte.

2. Salle de traite selon la revendication 1, **caractérisée en ce que** des moyens de commande (10) sont prévus pour commander la rotation de la mangeoire (3) autour de son axe sensiblement vertical (8).

3. Salle de traite selon la revendication 2, **caractérisée en ce que** les moyens de commande (10) pour commander la rotation de la mangeoire (7) autour de son axe sensiblement vertical (8) comprennent des surfaces de butée inclinées (11) sollicitant la mangeoire jusque dans une position d'alimentation.

4. Salle de traite selon l'une des revendications précédentes, **caractérisée en ce que** l'axe vertical (6) de la porte (3) et l'axe sensiblement vertical (8) de la mangeoire (3) sont les mêmes.

5. Salle de traite selon l'une des revendications 1 à 3, **caractérisée en ce que** l'axe vertical (6) de la porte (3) et l'axe sensiblement vertical (8) de la mangeoire (3) correspondante sont des axes différents.

6. Salle de traite selon l'une des revendications précédentes, **caractérisée en ce que** des moyens de commande (9) sont prévus pour commander la rotation de la porte (3) autour de son axe vertical (6).

7. Salle de traite selon l'une des revendications précédentes, **caractérisée en ce que** la porte (3) est pourvue d'un habillage (12) pour amortir un impact entre la porte et la mangeoire (7).

8. Salle de traite selon l'une des revendications précédentes, **caractérisée en ce que** l'axe vertical (6) de chaque porte (3) est situé près de la périphérie externe de la plate-forme rotative (2).

9. Salle de traite selon l'une des revendications précédentes, **caractérisée en ce que** l'axe vertical (6) de chaque porte (3) est situé près de la périphérie interne de la plate-forme rotative (2).

10. Salle de traite selon l'une des revendications précédentes, **caractérisée en ce que** les moyens de formation de stalles sont agencés pour positionner les animaux (1) en épi le long de la plate-forme (2).

11. Salle de traite selon l'une des revendications précédentes, **caractérisée en ce que** la porte (3) a une extension sensiblement droite.
